Europäisches Patentamt

European Patent Office

Office européen des brevets

(19)

(11) **EP 1 705 611 A1**

(12) **EUROPEAN PATENT APPLICATION**
published in accordance with Art. 158(3) EPC

(43) Date of publication:
**27.09.2006 Bulletin 2006/39**

(51) Int Cl.:
*G06T 1/00* (2006.01)

(21) Application number: **05709211.6**

(22) Date of filing: **06.01.2005**

(86) International application number:
**PCT/JP2005/000054**

(87) International publication number:
**WO 2005/069213 (28.07.2005 Gazette 2005/30)**

(84) Designated Contracting States:
**DE FR GB IT**

(30) Priority: **13.01.2004 JP 2004005388**

(71) Applicant: **NEC Corporation
Minato-ku
Tokyo 1088001 (JP)**

(72) Inventor: **MARUGAME, Atsushi,
NEC CORPORATION
Tokyo 1088001 (JP)**

(74) Representative: **Samson & Partner
Widenmayerstraße 5
D-80538 München (DE)**

(54) **FEATURE CHANGE IMAGE CREATION METHOD, FEATURE CHANGE IMAGE CREATION DEVICE, AND FEATURE CHANGE IMAGE CREATION PROGRAM**

(57)     A technique for applying a feature of a side attribute to an original image while keeping a principal feature. An image accumulating unit stores images classified into categories per the age or sex. A merging unit selects a category in accordance with an input category. A matching unit matches the input image and each of images included in the selected category with each other, and selects the image having highest degree of similarity. The merging unit merges the input image and the selected image by carrying out the weighted average and so on, and generates and outputs a merged image.

# Fig. 1

**Description**

**Technical Field**

The present invention relates to a technique for changing a part of a feature of an image or adding other features to the image, so as to generate a new image. In particular, the present invention relates to a feature changed image generating method, a feature changed image generating apparatus and a feature changed image generating program, in which a new image of a face of a person is generated by adding a feature caused by aging to an image of the face of the person.

**Background Art**

A new image added with a certain feature while keeping original features has been often generated by adding the certain feature to an image. Typical examples include an image of an aged face of one and the same person, who has lost his or her young features caused by aging but has had aged features. An image of an aged face of one and the same person has been generated by eliminating a young feature from an image of a young face of a person while adding an aged feature thereto.

Examples of a method for generating an image of an aged face based on an image of a young face include a method for drawing an aged feature such as a crease in an image of a young face by using computer graphics (abbreviated as "CG").

In this case, the aged feature such as the crease has depended upon an outline of a face. As a consequence, a manual work or a semi-automatic processing has been needed to apply "naturalness" to a facial image to be generated. Here, there have been some features which are difficult to be drawn per se. Unlike the crease produced as a relatively clear feature, an aging level around an eye or a skin clearness of a face has variously depended upon a person. Therefore, it has been difficult to determine as to how such a feature is drawn in an image.

U.S. Patent No. 6,556,196 B1 discloses an image processing method capable of adding an unclear feature to an image. In this image processing method, an aged feature can be clearly added to an image by the use of a three-dimensional model. More specifically, a general model (i.e., a prototype) of a deformable image of the face is generated based on three-dimensional facial data stored in a database. An inquiry facial image is stuck to the generated model. The model is degenerated by the use of a modeler in order to add changes in feature including an aged change. With this method, the same aged feature appears at the same portion even in the case where an image of the face of anyone is processed since the previously prepared prototype is utilized. As a result, an unnatural aged feature may appear on the facial image.

Japanese Laid-Open Patent Application JP-P2003-44866A discloses an image processing method capable of generating a target image based on a single specific image. In this method, an image of an exaggerated face is generated by extrapolation based on an image of a current face of a specific person and an image of an average face suitable for a current age. And then, an image of the face of the person having a target age is generated by interpolation based on an image of an average face having an age approximate to the target age and the image of the exaggerated face. With this method, no difference in aged change caused by variations among individuals in outlines of faces is taken into consideration since the image of the average face is used. Consequently, an unnatural aged feature may appear on the facial image.

Japanese Laid-Open Patent Application JP-A-Heisei, 6-333005 discloses a facial image generating apparatus includes parts pattern storing means, facial feature data storing means, designating means and facial image generating means. The parts pattern storing means stores therein respective parts patterns for parts, which represent facial images. The facial feature data storing means stores therein facial feature data corresponding to ages. When the designating means specifies data relevant to an age, the facial image generating means reads facial feature data in accordance with the specified data from the facial feature data storing means. And then, the facial image generating means reads the corresponding parts pattern of each of the parts from the parts pattern storing means in accordance with the facial feature data. In this manner, the facial image generating means combines the parts patterns, so as to generate a facial image.

Japanese Laid-Open Patent Application JP-A-Heisei, 10-289320 discloses a technique for speeding up calculation of a candidate category set in pattern recognition. A candidate table contained in table storage means holds therein mapping, in which a value of a reference feature vector calculated from a feature vector of a pattern is used as an input while the candidate category set is used as an output. Candidate category calculating means calculates a candidate category set corresponding to the value of the given reference feature vector based on the mapping of the candidate table.

Japanese Laid-Open Patent Application JP-P2002-123837A discloses a facial expression transforming method comprising the steps of: (1) defining a code book storing data defining a first facial expression set of a first person; (2) preparing data defining a second facial expression set, which gives a training facial expression set of a second person different from the first person; (3) leading a transformation function out of the training facial expression set and a corresponding facial expression included in the first facial expression set; and (4) applying the transformation function to the first facial expression set, so as to obtain a synthetic facial expression set.

Japanese Laid-Open Patent Application JP-P2003-69846A discloses an image correcting program for automatically carrying out a proper image correction. The image processing program includes a correction processing pre-stage section, a statistic information calculation section and a correction processing post-stage section. The correction processing pre-stage section carries out correction of a range or a tone with respect to an input image. The statistic information calculation section produces a color saturation reference value and a contour reference value as data representing preferences of an operator by using an output from the correction processing pre-stage section and a manually corrected image. The correction processing post-stage section carries out a color saturation correction processing by the use of the color saturation reference value, and further, carries out a contour emphasis processing by the use of the contour reference value.

**Disclosure of Invention**

An object of the present invention is to provide a feature changed image generating method, a feature changed image generating apparatus and a feature changed image generating program, in which other features can be added to an original image with a natural impression while keeping principal features of the original image.

Another object of the present invention is to provide the feature changed image generating method, the feature changed image generating apparatus and the feature changed image generating program, in which an image of an aged face can be generated in consideration of variations among individuals.

A further object of the present invention is to provide the feature changed image generating method, the feature changed image generating apparatus and the feature changed image generating program, in which a general aging change per age can be added to an input facial image.

A still further object of the present invention is to provide the feature changed image generating method, the feature changed image generating apparatus and the feature changed image generating program, in which a distribution ratio can be adjusted when an aging change and an individual feature are added to an input facial image.

According to an aspect of the present invention, a feature changed image generating method for generating a new image from an input image includes: (A)a step of providing a database in which a plurality of data, which are relating to a plurality of images respectively, are classified into a plurality of categories; (B)a step of determining an image which is most similar to the input image as a selected image based on a data belonging to a specified category specified from the plurality of categories; and (C)a step of merging the selected image and the input image.

At the step (A), a database in which the plurality of images are classified into the plurality of categories is optionally provided. In this case, at the step (B), an image which is most similar to the input image among images belonging to the specified category is selected as the selected image.

At the step (A), a database in which constituent components of the plurality of images are classified into the plurality of categories is optionally provided. In this case, the step (B) includes: (b1) determining a determined combination of the constituent components by which an image which is most similar to the input image is obtained by using the constituent components belonging to the specified category; and (b2) generating an image which is most similar to the input image as the selected image based on the determined combination.

At the step (A), a database in which the plurality of images are classified into the plurality of categories is provided, and each of the plurality of categories includes a plurality of images which are gradual variations of an identical object on an attribute (for example, the age), optionally. In this case, the step (B) includes: (b1) selecting an image which is most similar to the input image among images belonging to a category included in the plurality of categories and corresponding to an attribute of the input image as a similar image; and (b2) determining an image relating to a same object with the similar image as the selected image from images belonging to the specified category.

At the step (A), a database in which constituent components of the plurality of images are classified into the plurality of categories is provided optionally, and each of the plurality of categories includes constituent components of a plurality of images which are gradual variations of an identical object on an attribute. In this case, the step (B) includes: (b1) selecting a selected combination of the constituent components by which an image which is most similar to the input image is obtained, by using the constituent components belonging to a category included in the plurality of categories and corresponding to an attribute of the input image; (b2) converting component coefficients corresponding to the selected combination into converted coefficients which are component coefficients corresponding to the specified category; and (b3) generating the selected image by using the converted coefficients and the constituent components belonging to the specified category.

In the feature changed image generating method, each of the plurality of images can be a face image of a person. Also, the plurality of categories can be categorized based on an age.

When an age of a person on the input image is lower than an age specified by a user, a category included in the plurality of categories and corresponding to an age higher than the specified age can be selected as the specified category

When an age of a person in the input image is higher than an age specified by a user, a category included in the plurality of categories and corresponding to an age lower than the specified age can be selected as the specified category

In an another aspect of the present invention, a feature change applying method for gradually applying a feature change to an input image includes: (A) a step of providing a database in which constituent components of a plurality of images are classified into a plurality of categories, wherein each of the plurality of categories includes constituent components of a plurality of images which are gradual variations of an identical object on an attribute; (B) a step of selecting a selected combination of the constituent components by which an image which is most similar to the input image is obtained, by using the constituent components belonging to a category included in the plurality of categories and corresponding to an attribute of the input image; and (C) a step of converting component coefficients corresponding to the selected combination into converted coefficients which are component coefficients corresponding to the specified category.

In this feature change applying method, each of the plurality of images is a face image of a person, and the plurality of categories are categorized by based on an age.

In yet another aspect of the present invention, the feature changed image generating device is an apparatus for realizing the above mentioned feature changed image generating method, and includes constituent elements realizing each of the above mentioned steps. The feature changed image generating apparatus has a storing unit, an image determining unit and a merging unit. The above mentioned database is built on the storing unit. The image determining unit executes the step (B). The merging unit executes the step (C).

In yet another aspect of the present invention, the feature change applying apparatus is an apparatus for realizing the above mentioned feature change applying method, and includes constituent elements realizing each of the above mentioned steps. The feature change applying apparatus has a storing unit and a component coefficient converting unit. The above mentioned database is built on the storing unit. The component coefficient converting unit executes the step (B) and step (C).

In yet another object of the present invention, the feature changed image generating program and the feature change applying program are the programs for realizing the above mentioned feature changed image generating method and the feature change applying method respectively. the feature changed image generating program and the feature change applying program respectively cause a computer to execute each of the above mentioned steps.

According to the present invention, the image most similar to the input image is selected, and then, the input image and the selected image are merged with each other. As a consequence, other features can be added to the input image while keeping the original features of the input image. Furthermore, the input image is merged with the most similar image, so that the other features can be added to the input image with the natural impression.

**Brief Description of Drawings**

FIG. 1 is a block diagram illustrating a feature changed image generating apparatus in a first embodiment;
FIG. 2 is a flowchart illustrating a feature changed image generating method in the first embodiment;
FIG. 3 is a diagram illustrating a processing example, in which a maximum score image and an input image are linearly merged with each other;
FIG. 4 is a block diagram illustrating a feature changed image generating apparatus in a second embodiment;
FIG. 5 is a flowchart illustrating a feature changed image generating method in the second embodiment;
FIG. 6 is a block diagram illustrating a modification in the second embodiment;
FIG. 7 is a flowchart illustrating a feature changed image generating method in the modification in the second embodiment;
FIG. 8 is a block diagram illustrating a feature changed image generating apparatus in a third embodiment;
FIG. 9 is a flowchart illustrating a feature changed image generating method in the third embodiment;
FIG. 10 is a block diagram illustrating a feature changed image generating apparatus in a fourth embodiment;
FIG. 11 is a flowchart illustrating a feature changed image generating method in the fourth embodiment;
FIG. 12 is a block diagram illustrating a feature changed image generating apparatus in a fifth embodiment;
FIG. 13 is a flowchart illustrating a feature changed image generating method in the fifth embodiment;
FIG. 14 is a block diagram illustrating a modification in the fifth embodiment; and
FIG. 15 is a flowchart illustrating a feature changed image generating method in the modification in the fifth embodiment.

**Best Mode for Carrying Out the Invention**

(First Embodiment)

A description will be given below of a first embodiment according to the present invention referring to the attached drawings. Here, explanation will be made on an example in which an aging change is added to the image of the face of the person (i.e., a facial image).

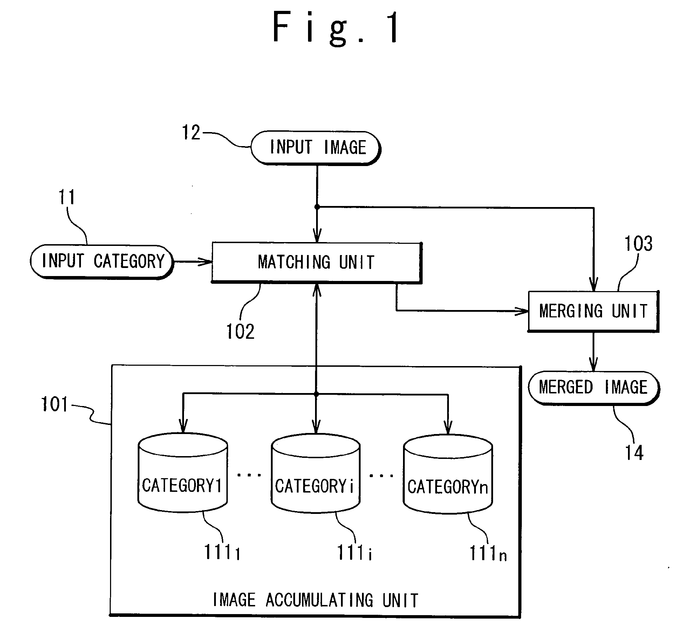

FIG. 1 is a block diagram illustrating a constitutional example of a feature changed image generating apparatus according to the present invention. As shown in FIG. 1, the feature changed image generating apparatus includes an image accumulating unit 101 serving as a database, a matching unit 102 for matching images and a merging unit 103 for merging images. The image accumulating unit 101 is implemented by, for example, a magnetic disk device. The matching unit 102 and the merging unit 103 are implemented by, for example, an arithmetic processor in a computer and a program executed by the arithmetic processor, respectively. Incidentally, in the present embodiment, a storing unit for storing information on a plurality of images corresponds to the image accumulating unit 101. In addition, an image determining unit for determining an image most similar to the input image corresponds to the matching unit 102.

The image accumulating unit 101 serves as a database, in which numerous facial images are accumulated. In the image accumulating unit 101, the numerous facial images are classified into categories $111_1$ (i.e., a first category), ..., $111_i$ (i.e., an i-th category), ..., $111_n$ (i.e., an n-th category) according to age or sex (i.e., an attribute). The categories $111_1$ to $111_n$ are classified according to age or sex: for example, "a male in teens", "a female in twenties" and the like. In the case where the categories $111_1$ to $111_n$ are comprehensively expressed or any one of the categories is expressed, they will be simply referred to as "category 111" hereinafter.

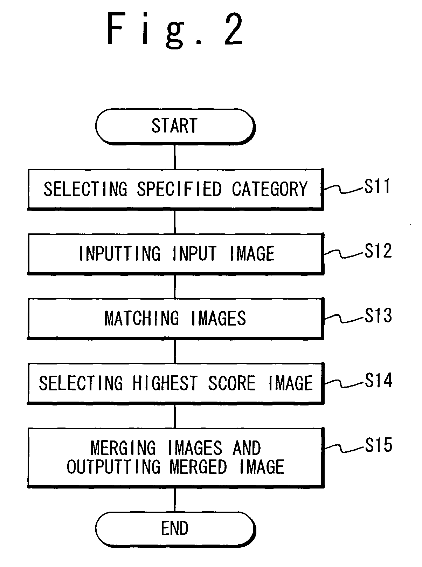

FIG. 2 is a flowchart illustrating a feature changed image generating method by the feature changed image generating apparatus shown in FIG. 1. When a user specifies the input category 11 (age or sex), the matching unit 102 selects a category 111 corresponding to the specified input category 11 from the image accumulating unit 101 (step S11). For example, in the case where a facial image of a male in teens is input to generate a facial image assuming the male in twenties, the user inputs "twenties" and "male" as the input category 11. Then, the matching unit 102 selects the category 111 of "a male in twenties". Here, the user may input not ages but an age per se. In this case, the matching unit 102 selects the category 111 corresponding to the ages including the input age.

Furthermore, the matching unit 102 may not always select the category 111 of an age bracket specified by the input category 11 but select another category 111. For example, the merging unit 103 may merge facial images while regarding an aged change as a linear change, as described later. In this case, the matching unit 102 receives not only information on the age specified by the input category 11 (i.e., a target age) but also information on an age of a person in the input image 12 (i.e., an input person's age). If the target age is greater than the input person's age, the matching unit 102 may select the category 111 of an age bracket much greater than the target age. In contrast, if the target age is less than the input person's age, the matching unit 102 may select the category 111 of an age bracket much less than the target age.

For example, in the case where the age of the person in the input image 12 ranges within twenties while the age bracket specified by the input category 11 ranges within thirties, the matching unit 102 may select the category 111 of forties. In this manner, a facial image in thirties can be generated by linearly merging the input image 12 in twenties with a facial image in forties. To the contrary, in the case where the age of the person in the input image 12 ranges within forties while the age bracket specified by the input category 11 ranges within thirties, the matching unit 102 may select the category 111 of twenties. In this manner, the facial image in thirties can be generated by linearly merging the input image 12 in forties with the facial image in twenties.

The matching unit 102 receives the input image 12 (step S12). Subsequently, the matching unit 102 matches the input image 12 with a group including facial images belonging to the selected category (step S13). The matching unit 102 performs the matching of the group including the facial images based on a general algorithm for use in a face recognizing processing. Specifically, the matching unit 102 compares facial features between the facial images included in the selected category 111 with the input image 12, thereby obtains the degree of similarity between each of the facial images and the input image 12. The facial features include the position or shape of the eye, the nose or the mouth or the entire facial contour. The obtained degree of similarity as a score corresponds to each of the facial images.

The matching unit 102 selects a facial image having the highest score (i.e., the highest score image) among the group including the facial images belonging to the selected category as a facial image most similar to the face in the input image 12 (step S14). In other words, the matching unit 102 can select a facial image most similar in principal parts of a face such as the shape of the eye, the mouth or the face to the input image 12 among the group including the facial images included in the selected category. Incidentally, in the case where it is determined such that the score becomes smaller as the degree of similarity becomes greater, the matching unit 102 selects a facial image having the smallest score. The matching unit 102 outputs a facial image most similar to the input image 12 as a selected facial image to the merging unit 103.

The merging unit 103 merges the input image 12 with the selected facial image, thereby generates a merged image 14 (step S15). The merging unit 103 outputs the generated merged image 14.

The merging unit 103 merges the facial images with each other by, for example, "a linear merging method". For example, the merging unit 103 normalizes the selected facial image such that the eye, the nose or the mouth (i.e., a feature) in the selected facial image is located at the same position as that of the input image 12, thereby generating a normalized facial image. Moreover, the merging unit 103 weighted-averages pixel data at a corresponding portion between the input image 12 and the normalized facial image, thereby generating the merged image 14. Here, the facial image merging method by the merging unit 103 is not limited to the linear merging method.

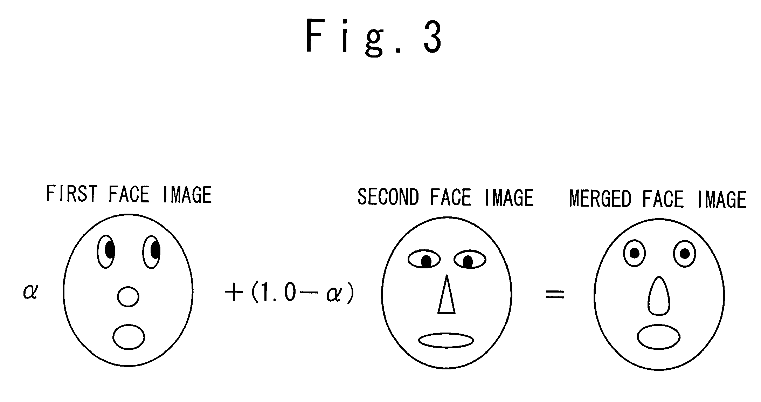

FIG. 3 illustrates one example of a linear merging processing by the use of the selected facial image and the input image 12. Here, explanation will be made on an example in which a person of the input image 12 has an age in twenties, the age bracket specified by the input category 11 ranges within thirties, and the matching unit 102 selects the category 111 corresponding to the forties.

In FIG. 3, it is assumed that a first facial image is the input image 12 and a second facial image is the selected facial image. With the use of a certain parameter $\alpha$, a merging ratio of the first facial image to the second facial image is expressed by $\alpha: (1-\alpha)$. Here, the parameter $\alpha$ is a value of 0 or more and 1 or less. In this example, since the age of the person of the merged image 14 is required to fall within thirties, the parameter $\alpha$ is set to be 0.5: namely, the merging ratio is set to be 1:1. The merging unit 103 sets the parameter $\alpha$ to 0.5, and thus, the merged image (i.e., the merged facial image) 14 is generated, as illustrated in FIG. 3, by taking a weighted average between the input image 12 and the normalized facial image.

Incidentally, the merging unit 103 may merge the input image 12 and the selected facial image with each other while varying the merging ratio during the image merging processing. In this case, the merging ratio is stepwise adjusted, so that an aged change from the age of the person of the input image 12 to a specified age can be stepwise confirmed.

In the present embodiment, the facial images have been classified into the plurality of categories according to age or sex, to be then stored in the image accumulating unit 101. Here, a facial image classifying method is not limited to the method in the present embodiment. For example, the age may be replaced with a group such as an idol group as the category creating criterion. In this case, respective facial images of members of an idol group A1 are stored in the first category, and further, respective facial images of members of an idol group A2 are stored in a second category. And then, the facial image of a person most similar to a member in a specified idol group may be merged with an input facial image 12, thereby generating the merged image 14. In this manner, the present invention is applicable to an amusement.

As described above, in the present embodiment, the specified facial image group is selected from the plurality of the classified facial image sets; the facial image most similar to the input image 12 is extracted from the selected facial image set; and the input image 12 is merged with the extracted facial image. As a consequence, other features can be added to the input image 12 while keeping the original features of the input image 12. Additionally, since the input image 12 is merged with the most similar facial image, other features can be added to the input image 12 in such a manner as to give the natural impression. Consequently, a feature of a secondary attribute can be added while keeping the principal feature of the original facial image, and further, the feature of the secondary attribute can be added to the facial image in such a manner as to give the natural impression.

Specifically, the selected facial image having the principal parts of the face such as the shape of the eye, the mouth or the face most similar to those of the input image 12 is merged with the input image 12. Therefore, the feature of the secondary attribute can be added to the facial image in such a manner as to give the natural impression while keeping the principal feature as an element for identifying the person. Here, the secondary attribute signifies an attribute such as the crease or a dimple which does not adversely influence on the identification of the person.

Furthermore, in the present embodiment, since the matching unit 102 selects the aged facial image similar to the input image 12, an aged feature peculiar to the outline of the face of the person of the input image 12 can be readily added to the input image 12. Moreover, the merged facial image can be readily generated without any necessity of consideration of the aged feature of each of the parts of the face such as the eye or the nose.

Additionally, in the present embodiment, since the image accumulating unit 101 classifies the facial images according to the ages and stores them therein, the facial image can be generated by designating a specific age. In addition, it is possible to generate a facial image having not only the aged feature but also a younger feature.

Moreover, in the present embodiment, since the merging ratio of the input image 12 to the selected facial image can be varied when the merging unit 103 performs the merging processing. The merging ratio during the merging processing can be adjusted, so that the aged change from the input image 12 can be stepwise confirmed. Furthermore, since an existing recognition system can be utilized in the present embodiment, the system can be readily assembled or modified.

(Second Embodiment)

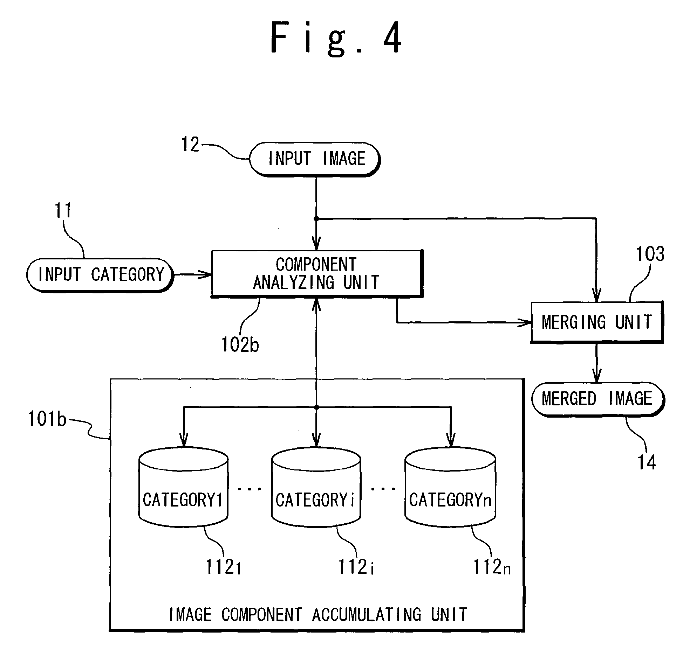

Next, a description will be given below of a second embodiment according to the present invention referring to the attached drawings. FIG. 4 is a block diagram illustrating a constitutional example of the feature changed image generating apparatus in the second embodiment. As shown in FIG. 4, the feature changed image generating apparatus includes an image component accumulating unit 101b, a component analyzing unit 102b for analyzing a component of an image and the merging unit 103 for merging images. The image component accumulating unit 101b is implemented by, for example, a magnetic disk device. The component analyzing unit 102b and the merging unit 103 are implemented by, for example, an arithmetic processor in the computer and the program executed by the arithmetic processor, respectively.

Incidentally, in the present embodiment, the storing unit for storing information on a plurality of images corresponds to the image component accumulating unit 101b. In addition, an image determining unit for determining an image most similar to the input image corresponds to the component analyzing unit 102b.

The image component accumulating unit 101b serves as a database, in which information on a plurality of facial images is accumulated. The image component accumulating unit 101b stores not facial images per se but a plurality of constituent components obtained by analyzing components of the facial image. A component analysis is exemplified by the principal component analysis.

Specifically, the plurality of facial images are classified into a plurality of categories according to age or sex. The constituent components obtained by analyzing the components of each of the facial images are stored in a manner corresponding to each of the categories in the image component accumulating unit 101b. For example, one vector can be obtained by arranging pixels of each of the facial images, and then, constituent components obtained by subjecting the vector to singular value decomposition are stored. As a result, in the image component accumulating unit 101b, the constituent components of each of the facial images are classified into categories $112_1$ (i.e., the first category), ..., $112_i$ (i.e., the i-th category), ..., $112_n$ (i.e., the n-th category) according to age or sex. The categories $112_1$ to $112_n$ are classified according to age or sex: for example, "a male in teens", "a female in twenties" and the like. In the case where the categories $112_1$ to $112_n$ are comprehensively expressed or any one of the categories is expressed, they will be simply referred to as "category 112" hereinafter.

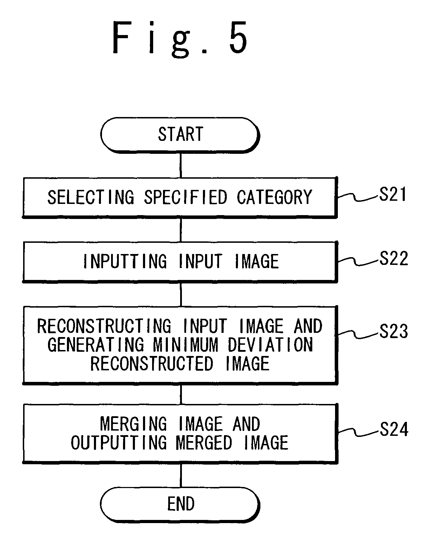

FIG. 5 is a flowchart illustrating the feature changed image generating method by the feature changed image generating apparatus shown in FIG. 4. When a user specifies the input category 11 (age or sex), the component analyzing unit 102b selects the category 112 corresponding to the specified input category 11 from the image component accumulating unit 101b (step S21).

Incidentally, the component analyzing unit 102b may not always select the category 112 of an age bracket specified by the input category 11 but select another category 112. For example, the merging unit 103 may merge facial images while regarding an aged change as a linear change, as described later. In this case, the component analyzing unit 102b receives not only information on the age specified by the input category 11 (i.e., a target age) but also information on an age of a person of the input image 12 (i.e., an input person's age). If the target age is greater than the input person's age, the component analyzing unit 102b may select the category 112 of an age bracket much greater than the target age. In contrast, if the target age is less than the input person's age, the component analyzing unit 102b may select the category 112 of an age bracket much less than the target age.

For example, in the case where the age of the person of the input image ranges within twenties while the age bracket specified by the input category 11 ranges within thirties, the component analyzing unit 102b may select the category 112 of forties. To the contrary, in the case where the age of the person of the input image ranges within forties while the age bracket specified by the input category 11 ranges within thirties, the component analyzing unit 102b may select the category 112 of twenties.

The component analyzing unit 102b generates "a minimum deviation reconstructed image" as a facial image most similar to the input image 12 by the use of the constituent components stored in the image component accumulating unit 101b. In the present embodiment, processing for generating the facial image similar to the input image 12 by the use of the constituent components by the component analyzing unit 102b is regarded as the reconstruction of the input image 12.

The component analyzing unit 102b reconstructs the input image 12 by the use of the constituent components corresponding to the selected category (step S23) upon receipt of the input image 12 (step S22). The component analyzing unit 102b reconstructs the input image 12 such that the deviation of a facial image to be generated with respect to the input image 12 becomes minimum. In other words, the component analyzing unit 102b carries out the reconstruction in such a manner as to maximize the degree of similarity of the facial image to be generated to the input image 12.

For example, in the case of the use of the linear component analysis such as the principal component analysis, a facial image to be generated is expressed by Equation (1), as described below. That is to say, a facial image $I_p$ to be generated is expressed as linear combination of principal components (i.e., constituent components) by using a coefficient $c_i$ (a real number) and a principal component $P_i$ obtained by the principal component analysis. Here, the principal

component $P_i$ is a vector of a real number having the same number of elements as the total number of pixels of a facial image in Equation (1).

$$I_p = c_1 P_1 + c_2 P_2 + \cdots + c_m P_m \quad \cdots (1)$$

The component analyzing unit 102b determines a combination of the constituent components (specifically, a value of each of the coefficients) with a minimum deviation from a facial image $I_0$ input as the input image 12 based on Equation (1) by using a constituent components in the selected category. Thereafter, the component analyzing unit 102b generates a facial image in accordance with the determined combination of the constituent components. And then, the component analyzing unit 102b outputs the generated facial image as the minimum deviation reconstructed image.

The merging unit 103 merges the input image 12 with the minimum deviation reconstructed image, thereby generating the merged image 14, and then, outputting the generated merged image 14 (step S24). The merging unit 103 generates the facial image in the same method as that in the first embodiment.

As described above, according to the present embodiment, the specified constituent component set is selected from the plurality of classified constituent component sets; the minimum deviation reconstructed image most similar to the input image 12 is generated by the use of the selected constituent component set; and the minimum deviation reconstructed image is merged with the input image 12. As a consequence, other features can be added to the input image 12 while keeping the original features of the input image 12. Additionally, since the input image 12 is merged with the most similar minimum deviation reconstructed image, other features can be added to the input image 12 in such a manner as to give the natural impression. Consequently, the feature of the secondary attribute can be added while keeping the principal feature of the original facial image, and further, the feature of the secondary attribute can be added to the facial image in such a manner as to give the natural impression.

Specifically, the image having the principal parts of the face such as the shape of the eye, the mouth or the face most similar to the input image 12 can be generated by the reconstruction, and then, the image is merged with the input image 12. Therefore, the feature of the secondary attribute can be added to the facial image in such a manner as to give the natural impression while keeping the principal feature. Here, the secondary attribute signifies an attribute such as the crease or the dimple which does not adversely influence on the identification of that person.

Furthermore, in the present embodiment, since the component analyzing unit 102b reconstructs the aged facial image similar to the input image 12, an aged feature peculiar to the outline of the face of the person in the input image 12 can be readily added to the input image 12. Moreover, the merged facial image can be readily generated without any necessity of consideration of the aged feature of each of the parts of the face such as the eye or the nose.

Additionally, in the present embodiment, since the image component accumulating unit 101b classifies the constituent components according to the age and stores them therein, the facial image can be generated by designating a specific age. In addition, it is possible to generate a facial image having not only the aged feature but also a younger feature.

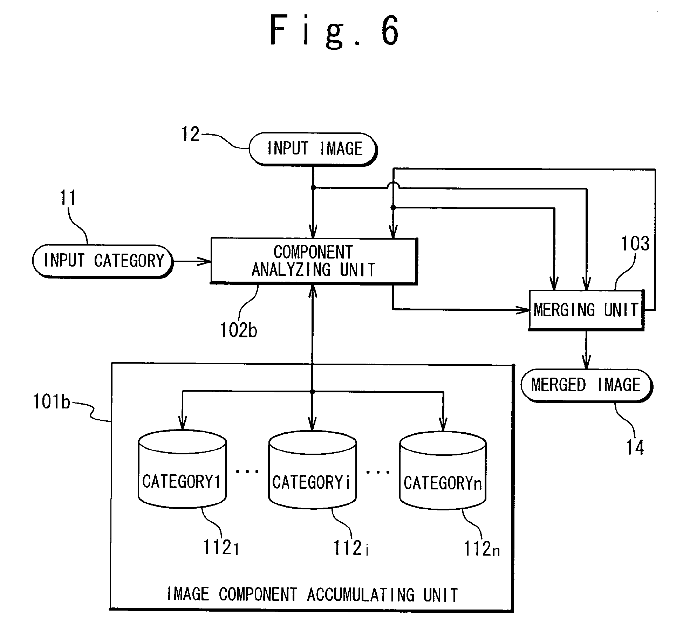

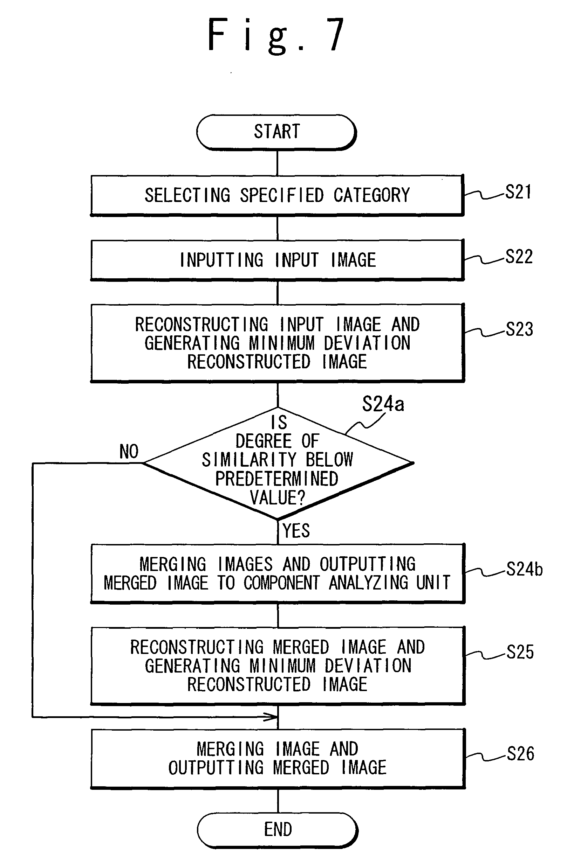

On the other hand, in the case where the minimum deviation reconstructed image sufficiently similar to the input image 12 cannot be generated at one time, the reconstructing processing may be repeatedly performed. FIG. 6 is a block diagram illustrating a modification, in which the configuration of the feature changed image generating apparatus shown in FIG. 4 is partly modified. FIG. 7 is a flowchart illustrating the feature changed image generating method in the feature changed image generating apparatus shown in FIG. 6. Here, the processing in steps S21 to S23 in FIG. 7 is the same as that in steps S21 to S23 in FIG. 5.

In the modification shown in FIG. 6, in the case where the degree of similarity of the minimum deviation reconstructed image to the input image 12 is lower than a predetermined value (Yes in step S24a), the merging unit 103 merges the input image 12 and the minimum deviation reconstructed image with each other, and then, outputs a merged image to the component analyzing unit 102b (step S24b). In other words, the merging unit 103 feeds back the merged image to the component analyzing unit 102b.

Upon receipt of the merged image, the component analyzing unit 102b reconstructs the input image 12 in the same processing as that in step S23 based on the input merged image, and then, generates the minimum deviation reconstructed image again (step S25). The component analyzing unit 102b outputs the minimum deviation reconstructed image to the merging unit 103. The merging unit 103 merges the merged image, which has been recently fed back, with the minimum deviation reconstructed image, which has been input again from the component analyzing unit 102b, to generate another merged image 14, and thereafter, output it (step S26). Incidentally, although only one feedback is shown in FIG. 7, the processing in steps S24a and S25 is performed again in the case where the degree of similarity of the minimum deviation reconstructed image generated in step S25 to the input image 12 is still lower than the predetermined value.

As described above, even if the input image 12 and an image space contained in the category 112 are materially different from each other, the reconstructed image can be matched with the input image 12 by repeating the reconstructing processing. In other words, even if the degree of similarity to the input image 12 is absolutely low, it is possible to generate a reconstructed image having a relatively high similarity.

In the present embodiment, the constituent components based on the facial image have been classified into the plurality of categories according to age or sex, to be then stored in the image component accumulating unit 101b. Here, a facial image classifying method is not limited to the method in the present embodiment. For example, the age may be replaced with a group such as an idol group as the category creating criterion. In this case, respective facial images of members of the idol group A1 are stored in the first category, and further, respective facial images of members of the idol group A2 are stored in the second category. And then, the facial image of the person most similar to the member in the specified idol group may be merged with the input facial image 12, thereby generating the merged image 14. In this manner, the present invention is applicable to the amusement.

(Third Embodiment)

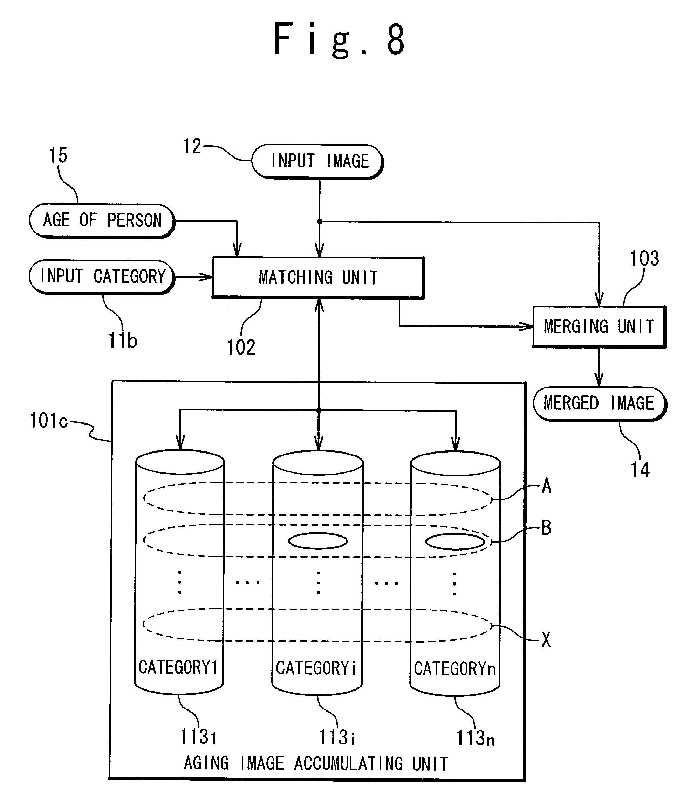

Next, a description will be given below of a third embodiment according to the present invention referring to the attached drawings. FIG. 8 is a block diagram illustrating a constitutional example of the feature changed image generating apparatus in the third embodiment. As illustrated in FIG. 8, the feature changed image generating apparatus includes an aging image accumulating unit 101c, a matching unit 102 for matching images and the merging unit 103 for merging images. The aging image accumulating unit 101c is implemented by, for example, a magnetic disk device.

Incidentally, in the present embodiment, the storing unit for storing information on a plurality of images is equivalent to the aging image accumulating unit 101c. The matching unit 102 and the merging unit 103 carry out the process similar to those of the first embodiment.

The aging image accumulating unit 101c serves as a database, in which facial images having features changed with age are accumulated per age with respect to each of numerous persons (e.g., a person A to a person X). Specifically, the aging image accumulating unit 101c classifies facial images of a certain person, gradually changed with age, into categories $113_1$ (i.e., the first category) to $113_n$ (i.e., the n-th category) according to age, and then, stores them. In the case where the categories $113_1$ to $113_n$ are comprehensively expressed or any one of the categories is expressed, they will be simply referred to as "category 113" hereinafter.

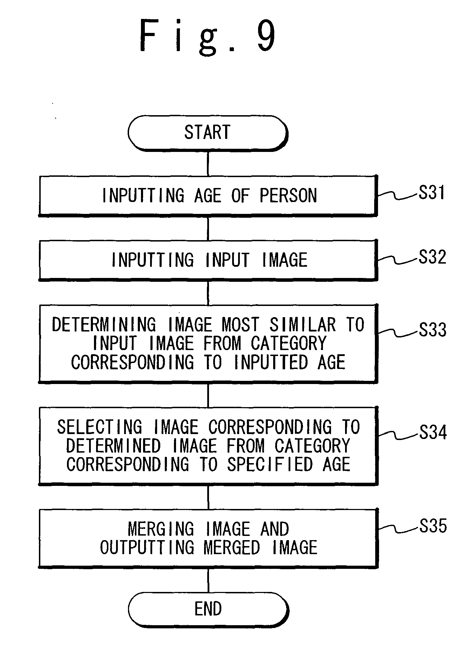

FIG. 9 is a flowchart illustrating the feature changed image generating method by the feature changed image generating apparatus illustrated in FIG. 8. In the present embodiment, the matching unit 102 receives information designating an age 15 of the person of the input image 12 from the user (step S31), and further, receives the input image 12 (step S32). The matching unit 102 selects one category 113 corresponding to the age 15 of the person among the plurality of categories 113 contained in the aging image accumulating unit 101c. The matching unit 102 matches all of facial images included in the selected category 113 with the input image 12. And then, the matching unit 102 determines a facial image having the maximum degree of similarity to the input image 12 among the facial images included in the selected category 113 (step S33). Here, it is assumed that a facial image of a person B is determined. Furthermore, it is assumed that a category $113_i$ is selected in step S33.

When the input category (i.e., a specified age) 11 is specified by the user, the matching unit 102 selects a facial image of the same person as the person of the image determined in step S33 (in this case, the facial image of the person B) among facial images included in the category 113 corresponding to the specified age (e.g., a category $113_n$) (step S34). Thereafter, the matching unit 102 outputs the selected facial image as a selected facial image to the merging unit 103. The merging unit 103 merges the input image 12 with the selected facial image, thereby generating the merged image 14, and then, outputting the generated merged image 14 (step S35).

As described above, in the present embodiment, the facial image of the person having the specified age of the person of the image most similar to the input image 12 is extracted; and the input image 12 is merged with the extracted facial image. As a consequence, other features can be added to the input image 12 while keeping the original feature of the input image 12. Additionally, other features can be added to the input image 12 in such a manner as to give the natural impression. Consequently, the feature of the secondary attribute can be added while keeping the principal feature of the original facial image, and further, the feature of the secondary attribute can be added to the facial image in such a manner as to give the natural impression.

Furthermore, in the present embodiment, since the matching unit 102 selects the aged facial image of the person of the image similar to the input image 12, an aged feature peculiar to the outline of the face of the person in the input image 12 can be readily added to the input image 12. Moreover, the merged facial image can be readily generated without any necessity of consideration of the aged feature of each of the parts of the face such as the eye or the nose.

(Fourth Embodiment)

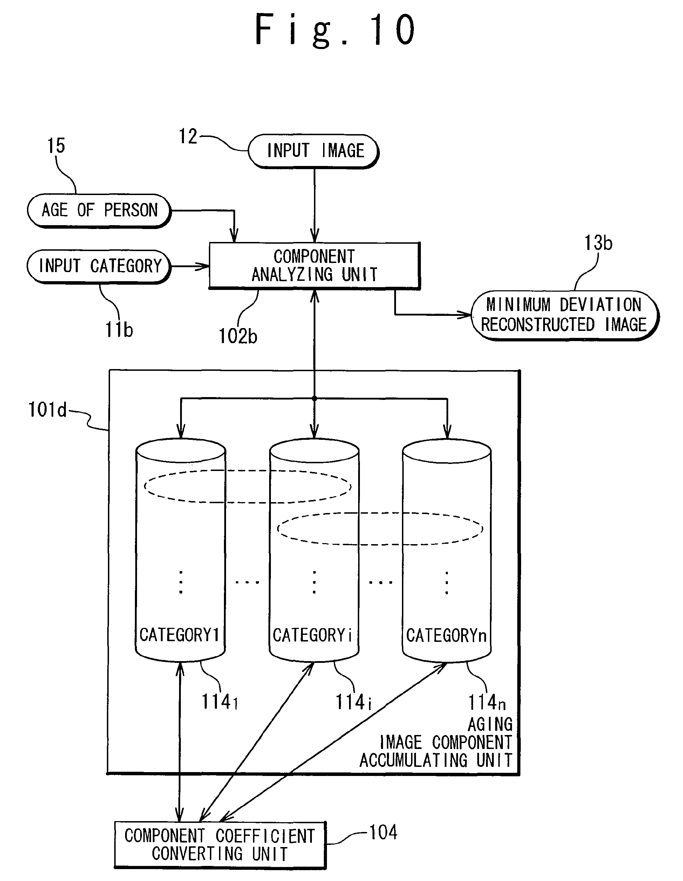

Next, a description will be given below of a fourth embodiment according to the present invention referring to the attached drawings. FIG. 10 is a block diagram illustrating a constitutional example of the feature changed image generating apparatus in the fourth embodiment. As shown in FIG. 10, the feature changed image generating apparatus includes an aging image component accumulating unit 101d, the component analyzing unit 102b for analyzing a component of the image and a component coefficient conversing unit 104 for converting a component coefficient. The component analyzing unit 102b carries out the process similar to those of the second embodiment. The aging image component accumulating unit 101d is implemented by, for example, a magnetic disk device. The component coefficient conversing unit 104 is implemented by, for example, an arithmetic processor in the computer and the program executed by the arithmetic processor. Incidentally, in the present embodiment, the storing unit for storing information on a plurality of images corresponds to the aging image component accumulating unit 101d.

The aging image component accumulating unit 101d serves as a database, in which information on a plurality of persons is accumulated. The aging image component accumulating unit 101d stores not facial images per se but a plurality of constituent components obtained by analyzing components of the facial image. A component analysis is exemplified by the principal component analysis. Specifically, the plurality of facial images are classified into a plurality of categories according to age or sex. The constituent components obtained by analyzing the components of each of the facial images are stored in a manner corresponding to each of the categories in the aging image component accumulating unit 101d. Specifically, in the aging image component accumulating unit 101d, the constituent components are classified into categories $114_1$ (i.e., the first category) to $114_n$ (i.e., the n-th category) according to an age bracket of teens or twenties. In the case where the categories $114_1$ to $114_n$ are comprehensively expressed or any one of the categories is expressed, they will be simply referred to as "category 114" hereinafter. Incidentally, an image of a face of one and the same person is contained in any two of the categories before the component analysis.

The component coefficient conversing unit 104 converts a coefficient at the time when the constituent components contained in each of the categories 114 are analyzed. The present embodiment exemplifies a case where a principal component analysis is used as the component analysis in the same manner as in the second embodiment.

Explanation will be made on coefficient conversion carried out by the component coefficient conversing unit 104. The two categories 114 for use in the component analysis are defined as a category A and a category B. In addition, principal components (i.e., constituent components) contained in the category A and the category B, respectively, are specified by $P_i$ (wherein i is 1 to n) and $Q_i$ (wherein i is 1 to m), respectively. Furthermore, respective coefficients corresponding to the principal components $P_i$ and $Q_i$ are denoted by $c_i$ (wherein i is 1 to n) and $d_i$ (wherein i is 1 to m), respectively. A description will be given below of a case where the coefficient ci is converted into the coefficient di.

Facial images before and after an aged change of one and the same person, generated by the use of the constituent components contained in the category A and the category B are specified by $I_p$ and $J_p$, respectively. At this time, the facial images $I_p$ and $J_p$ are expressed by Equations (2) and (3), respectively.

$$I_p = c_1 P_1 + c_2 P_2 + \cdots + c_n P_n \qquad \cdots (2)$$

$$J_p = d_1 Q_1 + d_2 Q_2 + \cdots + d_m Q_m \qquad \cdots (3)$$

As a result, the coefficient di can be obtained by linearly converting the coefficient $c_i$ in accordance with Equation (4), as follows:

[Equation 1]

$$\begin{bmatrix} d_1 \\ d_2 \\ \vdots \\ d_m \end{bmatrix} = \begin{bmatrix} a_{11} & a_{12} & \cdots\cdots & a_{1n} \\ a_{21} & \ddots & & \vdots \\ \vdots & & \ddots & \vdots \\ a_{m1} & \cdots\cdots\cdots & & a_{mn} \end{bmatrix} \begin{bmatrix} c_1 \\ c_2 \\ \vdots \\ c_n \end{bmatrix} \qquad \cdots (4)$$

In Equation (4), a matrix A = $\{a_{ij}\}$ is obtained by calculating a generalized inverse matrix. As a consequence, both of the category A and the category B in the categories 114 need commonly contain the constituent components of at least n or more of one and the same persons. An element $\alpha_{ij}$ in the matrix A is an inter-age conversion coefficient for converting the constituent components between ages.

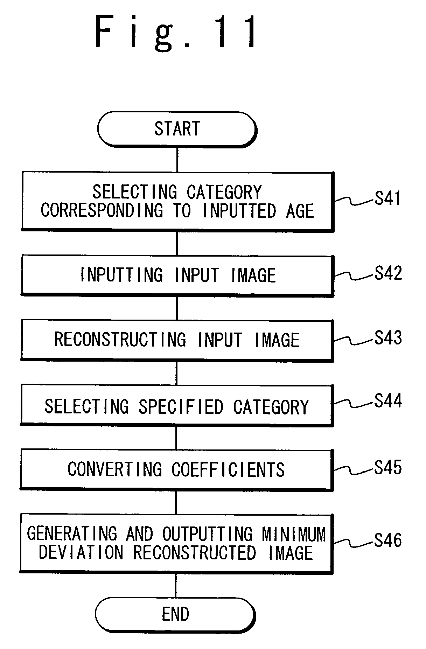

FIG. 11 is a flowchart illustrating the feature changed image generating method by the feature changed image generating apparatus illustrated in FIG. 10. When the user inputs the age 15 of the person of the input image 12, the component analyzing unit 102b selects the category 114 corresponding to an age bracket including the age 15 of the person (step S41). The component analyzing unit 102b reconstructs the input image 12 by the use of the constituent components contained in the selected category 114 (step S43) upon receipt of the input image 12 (step S42). The component analyzing unit 102b reconstructs the input image 12 such that the deviation of a facial image to be generated with respect to the input image 12 becomes minimum value. In other words, the component analyzing unit 102b carries out the reconstruction in such a manner as to maximize the degree of similarity of the facial image to be generated to the input image 12.

When an input category (i.e., the specified age) 11b is input by the user, the component analyzing unit 102b selects the category 114 corresponding to the specified age (step S44) . The component coefficient conversing unit 104 converts each of the coefficients at the time of the reconstruction into a coefficient in the category 114 corresponding to the specified age (step S45) in accordance with Equation (4).

Then, the component analyzing unit 102b generates a minimum deviation reconstructed image 13b in accordance with Equation (3) by the use of the coefficient after the conversion and the constituent component contained in the category 114 corresponding to the specified age, and then, outputs it (step S46).

As described above, in the present embodiment, the category 114 is configured such that any two of the categories contain the constituent components regarding the face of one and the same person. The input image 12 is reconstructed by using the constituent components in the category 114 corresponding to the age 15 of the person. The coefficient at the time of the reconstruction is converted into the coefficient in the category 114 corresponding to the specified age. Thereafter, the minimum deviation reconstructed image 13b is generated by using the coefficient after the conversion. Thus, it is possible to obtain the image sufficiently expressing the side feature when the face of the input image 12 is changed with age.

(Fifth Embodiment)

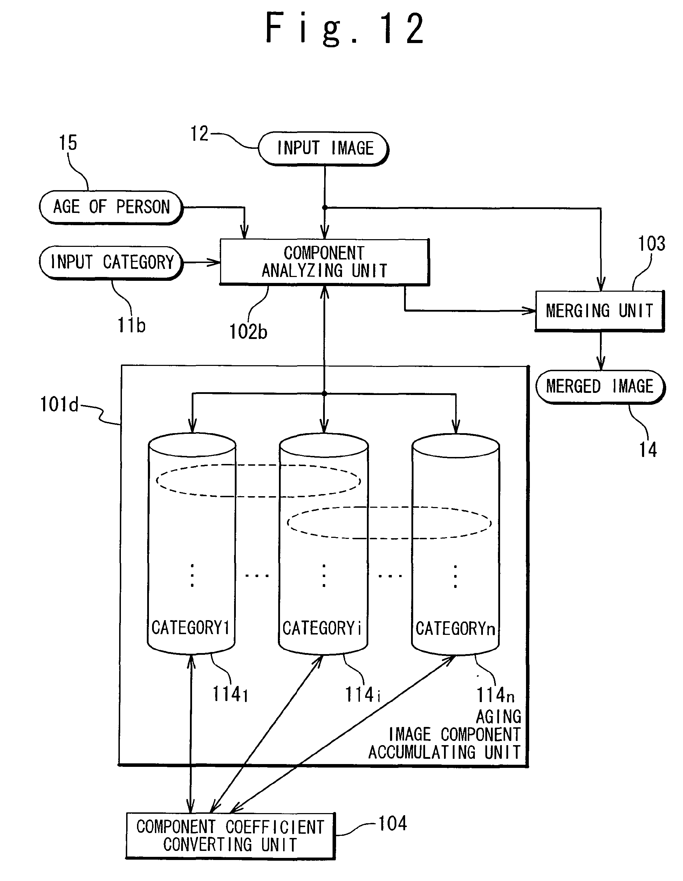

Next, a description will be given below of a fifth embodiment according to the present invention referring to the attached drawings. FIG. 12 is a block diagram illustrating a constitutional example of the feature changed image generating apparatus in the fifth embodiment. The feature changed image generating apparatus illustrated in FIG. 12 includes the merging unit 103 for merging the input image and the minimum deviation reconstructed image with each other in addition to the configuration illustrated in the fourth embodiment.

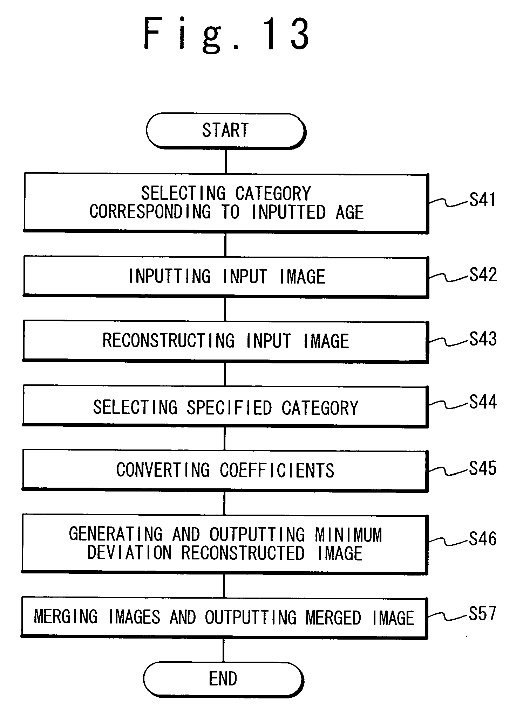

FIG. 13 is a flowchart illustrating the feature changed image generating method in the feature changed image generating apparatus illustrated in FIG. 12. Here, the processing in steps S41 to S46 in FIG. 13 is the same as that in steps S41 to S46 in FIG. 11.

Like in the second embodiment, the merging unit (i.e., an image merging unit) 103 merges the input image 12 with the minimum deviation reconstructed image upon receipt of the minimum deviation reconstructed image from the component analyzing unit 102b, thereby generating the merged image 14. And then, the merging unit 103 outputs the generated merged image 14 (step S57).

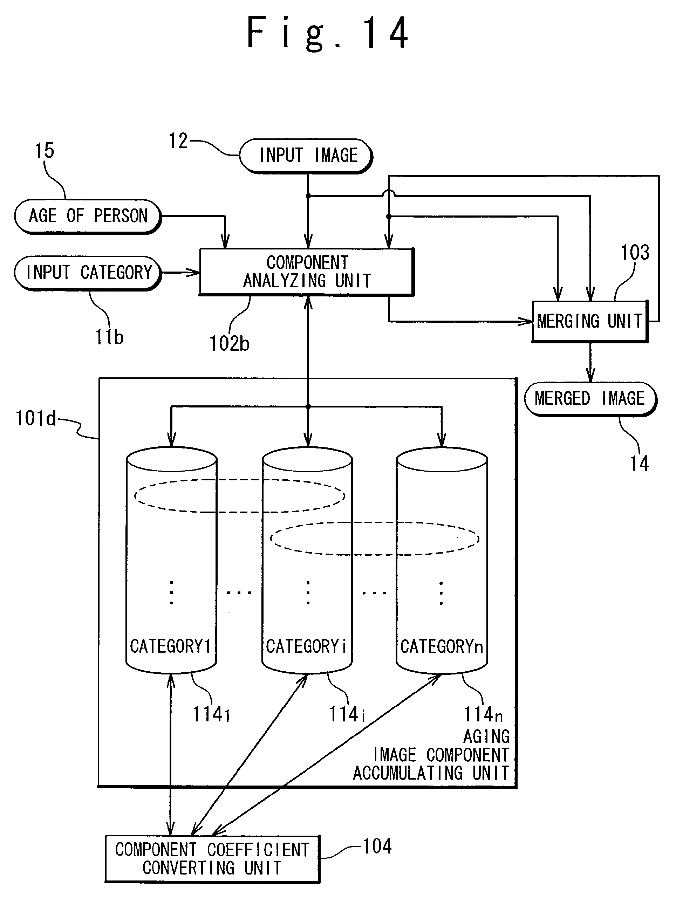

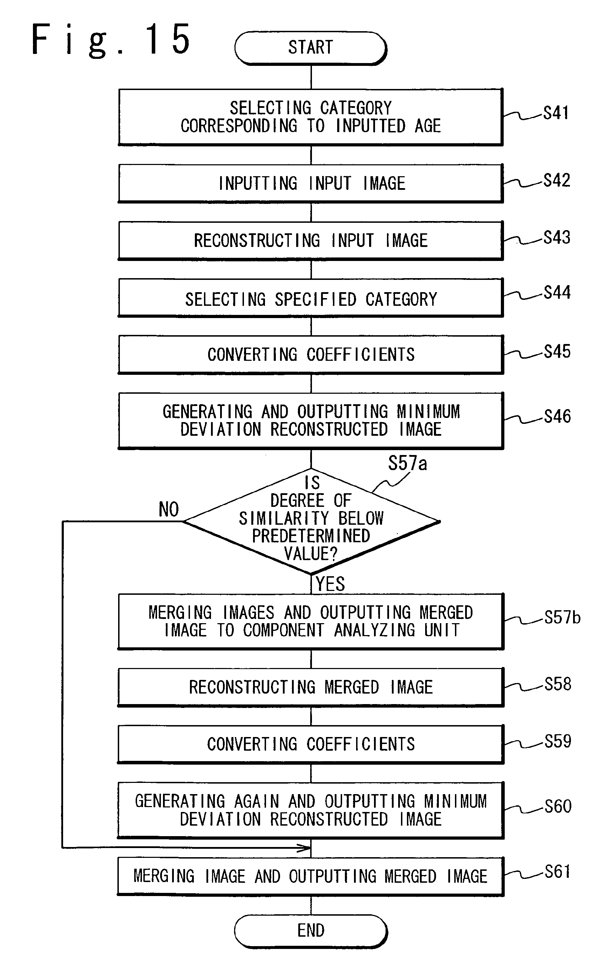

Here, in the case where the minimum deviation reconstructed image sufficiently similar to the input image 12 cannot be generated, the reconstructing processing may be repeatedly performed. FIG. 14 is a block diagram illustrating a modification, in which the configuration of the feature changed image generating apparatus illustrated in FIG. 12 is partly modified. Moreover, FIG. 15 is a flowchart illustrating the feature changed image generating method in the feature changed image generating apparatus illustrated in FIG. 14.

In the modification illustrated in FIG. 14, like in the modification illustrated in FIG. 6, in the case where the degree of similarity of the minimum deviation reconstructed image to the input image 12 is lower than a predetermined value (step S57a), the merging unit 103 outputs an image obtained by merging the input image 12 and the minimum deviation reconstructed image with each other, to the component analyzing unit 102b (step S57b). In other words, the merging unit 103 feeds back the merged image to the component analyzing unit 102b.

Upon receipt of the merged image, the component analyzing unit 102b reconstructs a facial image based on the input merged image (step S58). A component coefficient conversing unit 104 converts each of coefficients of the reconstructed facial images into a coefficient in a category corresponding to the specified age (step S59). The component analyzing unit 102b generates again the minimum deviation reconstructed image by the use of the coefficients after the conversion and constituent components in the category corresponding to the specified age. The component analyzing unit 102b outputs the generated minimum deviation reconstructed image to the merging unit 103 (step S60).

The merging unit 103 merges the merged image, which has been lastly fed back, with the minimum deviation reconstructed image, which has been input again from the component analyzing unit 102b, to generate the merged image 14, and thereafter, output it (step S61). Incidentally, although only one feedback is illustrated in FIG. 15, the processing in steps S57b and thereafter is performed again in the case where the degree of similarity of the minimum deviation reconstructed image generated in step S60 to the input image 12 is still lower than the predetermined value.

Even if the input image 12 and an image space contained in the category 114 are materially different from each other, the reconstructed image can be matched with the input image 12 by repeating the reconstructing processing.

Incidentally, the feature changed image generating apparatus, in which the facial image of the person is changed with age, has been mainly illustrated in the above-mentioned embodiments. However, the present invention is applicable to a case where the feature is added to the image other than the facial image in addition to the case where the feature is added to the facial image.

Furthermore, the feature changed image generating apparatus in the above-mentioned embodiments can be implemented by the computer. Specifically, programs for achieving the functions of the matching unit 102, the merging unit 103, the component analyzing unit 102b and the component coefficient conversing unit 104 may be provided, to be stored in a storing unit in the computer. An arithmetic processor in the computer executes processing in accordance with the programs, thus achieving the feature changed image generation in each of the embodiments.

Moreover, the present invention is applicable to generation of a montage changed with age. Even in the case where there is only a photograph of someone in youth, a facial image assuming an aged change can be generated. Furthermore, the present invention can be applied to a cellular mobile phone with a camera or an amusement application for use in the amusement arcade or the like.

**Claims**

1. A feature changed image generating method for generating a new image from an input image, comprising:

   providing a database in which a plurality of data, which are relating to a plurality of images respectively, are classified into a plurality of categories;
   determining an image which is most similar to said input image as a selected image based on a data belonging to a specified category specified from said plurality of categories; and
   merging said selected image and said input image.

2. The feature changed image generating method according to claim 1,
   wherein a database in which said plurality of images are classified into said plurality of categories is provided in said providing, and
   an image which is most similar to said input image among images belonging to said specified category is selected as said selected image in said determining.

3. The feature changed image generating method according to claim 1,
   wherein a database in which constituent components of said plurality of images are classified into said plurality of categories is provided in said providing, and
   said determining includes:

   determining a determined combination of said constituent components by which an image which is most similar to said input image is obtained by using said constituent components belonging to said specified category; and
   generating an image which is most similar to said input image as said selected image based on said determined combination.

4. The feature changed image generating method according to claim 1,
   wherein a database in which said plurality of images are classified into said plurality of categories is provided, and
   each of said plurality of categories includes a plurality of images which are gradual variations of an identical object on an attribute, and
   said determining includes:

   selecting an image which is most similar to said input image among images belonging to a category included in said plurality of categories and corresponding to an attribute of said input image as a similar image; and
   determining an image relating to a same object with said similar image as said selected image from images belonging to said specified category.

5. The feature changed image generating method according to claim 1,

wherein a database in which constituent components of said plurality of images are classified into said plurality of categories is provided, and each of said plurality of categories includes constituent components of a plurality of images which are gradual variations of an identical object on an attribute, and
said determining includes:

selecting a selected combination of said constituent components by which an image which is most similar to said input image is obtained, by using said constituent components belonging to a category included in said plurality of categories and corresponding to an attribute of said input image;
converting component coefficients corresponding to said selected combination into converted coefficients which are component coefficients corresponding to said specified category; and
generating said selected image by using said converted coefficients and said constituent components belonging to said specified category.

6. The feature changed image generating method according to any of claims 1 to 5,
wherein each of said plurality of images is a face image of a person, and
said plurality of categories are categorized based on an age.

7. The feature changed image generating method according to claim 6,
wherein a category included in said plurality of categories and corresponding to an age higher than said specified age is selected as said specified category when an age of a person on said input image is lower than an age specified by a user.

8. The feature changed image generating method according to claim 6,
wherein a category included in said plurality of categories and corresp -45- -45-onding to an age lower than said specified age is selected as said specified category when an age of a person in said input image is higher than an age specified by a user.

9. A feature change applying method for gradually applying a feature change to an input image, comprising:

providing a database in which constituent components of a plurality of images are classified into a plurality of categories, wherein each of said plurality of categories includes constituent components of a plurality of images which are gradual variations of an identical object on an attribute;
selecting a selected combination of said constituent components by which an image which is most similar to said input image is obtained, by using said constituent components belonging to a category included in said plurality of categories and corresponding to an attribute of said input image; and
converting component coefficients corresponding to said selected combination into converted coefficients which are component coefficients corresponding to said specified category.

10. The feature change applying method according to claim 9,
wherein each of said plurality of images is a face image of a person, and
said plurality of categories are categorized by based on an age.

11. A feature changed image generating apparatus for generating a new image from an input image, comprising:

a storing unit configured to store a plurality of data which are relating to a plurality of images respectively and classified into a plurality of categories;
an image determining unit configured to determine an image which is most similar to said input image as a selected image based on a data belonging to a specified category specified from said plurality of categories; and
a merging unit configured to merge said selected image and said input image.

12. The feature changed image generating apparatus according to claim 11,
wherein said plurality of images are classified into said plurality of categories in said storing unit, and
said image determining unit determines an image which is most similar to said input image among images belonging to said specified category as said selected image.

13. The feature changed image generating apparatus according to claim 11,
wherein a constituent components of said plurality of images are classified into said plurality of categories in said storing unit, and

said image determining unit determines a determined combination of said constituent components by which an image which is most similar to said input image is obtained by using said constituent components belonging to said specified category, and generates an image which is most similar to said input image as said selected image based on said determined combination.

**14.** The feature changed image generating apparatus according to claim 11,
wherein said storing unit stores said plurality of images classified into said plurality of categories ,and each of said plurality of categories includes a plurality of images which are gradual variations of an identical object on an attribute, and
said image determining unit selects an image which is most similar to said input image among images belonging to a category included in said plurality of categories and corresponding to an attribute of said input image as a similar image, and determines an image relating to a same object with said similar image as said selected image from images belonging to said specified category.

**15.** The feature changed image generating apparatus according to claim 11,
wherein constituent components of said plurality of images are classified into said plurality of categories in said storing unit, and each of said plurality of categories includes constituent components of a plurality of images which are gradual variations of an identical object on an attribute, and
said image determining unit selects a selected combination of said constituent components by which an image which is most similar to said input image is obtained, by using said constituent components belonging to a category included in said plurality of categories and corresponding to an attribute of said input image, converts component coefficients corresponding to said selected combination into converted coefficients which are component coefficients corresponding to said specified category, and generates said selected image by using said converted coefficients and said constituent components belonging to said specified category.

**16.** The feature changed image generating apparatus according to any of claims 11 to 15,
wherein each of said plurality of images is a face image of a person, and
said plurality of categories are categorized based on an age.

**17.** The feature changed image generating apparatus according to claim 16, further comprising a selecting unit,
wherein said selecting unit selects a category included in said plurality of categories and corresponding to an age higher than said specified age as said specified category when an age of a person on said input image is lower than an age specified by a user.

**18.** The feature changed image generating apparatus according to claim 16, further comprising a selecting unit,
wherein said selecting unit selects a category included in said plurality of categories and corresponding to an age lower than said specified age as said specified category when an age of a person on said input image is higher than an age specified by a user.

**19.** A feature change applying apparatus for gradually applying a feature change to an input image, comprising:

a storing unit in which constituent components of a plurality of images are classified into a plurality of categories; and
a component coefficient converting unit,

whereineach of said plurality of categories includes constituent components of a plurality of images which are gradual variations of an identical object on an attribute, and
said component coefficient converting unit selects a selected combination of said constituent components by which an image which is most similar to said input image is obtained, by using said constituent components belonging to a category included in said plurality of categories and corresponding to an attribute of said input image, and converts component coefficients corresponding to said selected combination into converted coefficients which are component coefficients corresponding into said specified category.

**20.** The feature change applying apparatus according to claim 19,
wherein each of said plurality of images is a face image of a person, and
said plurality of categories are categorized based on an age.

**21.** A feature changed image generating program for generating a new image from an input image executed by a computer, comprising a storing device storing a plurality of data which are relating to a plurality of images respectively and classified into a plurality of categories, and
the feature changed image generating program causes the computer to execute:

determining an image which is most similar to said input image as a selected image based on a data belonging to a specified category specified from said plurality of categories; and
merging said selected image and said input image.

22. The feature changed image generating program according to claim 21,
wherein said plurality of images are classified into said plurality of categories in said storing device, and
the feature changed image generating program causes the computer to execute determining an image which is most similar to said input image among images belonging to said specified category as said selected image.

23. The feature changed image generating program according to claim 21,
wherein constituent components of said plurality of images classified into said plurality of categories are stored in said storing device, and
the feature changed image generating program causes the computer to execute:

determining a determined combination of said constituent components by which an image which is most similar to said input image is obtained by using said constituent components belonging to said specified category; and
generating an image which is most similar to said input image as said selected image based on said determined combination.

24. The feature changed image generating program according to claim 21,
wherein said storing device stores said plurality of images classified into said plurality of categories, and each of said plurality of categories includes a plurality of images which are gradual variations of an identical object on an attribute, and
the feature changed image generating program causes the computer to execute:

selecting an image which is most similar to said input image among images belonging to a category included in said plurality of categories and corresponding to an attribute of said input image as a similar image; and
determining an image relating to a same object with said similar image as said selected image from images belonging to said specified category.

25. The feature changed image generating program according to claim 21,
wherein said storing device stores constituent components of said plurality of images classified into said plurality of categories, and each of said plurality of categories includes constituent components of a plurality of images which are gradual variations of an identical object on an attribute, and
said feature changed image generating program causes the computer to execute:

selecting a selected combination of said constituent components by which an image which is most similar to said input image is obtained, by using said constituent components belonging to a category included in said plurality of categories and corresponding to an attribute of said input image;
converting component coefficients corresponding to said selected combination into converted coefficients which are component coefficients corresponding to said specified category; and
generating said selected image by using said converted coefficients and said constituent components belonging to said specified category.

26. A feature change applying program for gradually applying a feature change to an input image executed by a computer,
wherein the computer has a storing device in which constituent components of a plurality of images are classified into a plurality of categories, and each of said plurality of categories includes constituent components of a plurality of images which are gradual variations of an identical object on an attribute, and
the feature change applying program causes the computer to execute:

selecting a selected combination of said constituent components by which an image which is most similar to said input image is obtained, by using said constituent components belonging to a category included in said plurality of categories and corresponding to an attribute of said input image; and
converting component coefficients corresponding to said selected combination into converted coefficients which are component coefficients corresponding to said specified category.

# Fig. 1

INPUT IMAGE

INPUT CATEGORY

MATCHING UNIT

MERGING UNIT

MERGED IMAGE

CATEGORY1 ... CATEGORYi ... CATEGORYn

IMAGE ACCUMULATING UNIT

# Fig. 2

```
                  ┌─────────────┐
                  │    START    │
                  └──────┬──────┘
                         │
   ┌─────────────────────────────────────┐
   │   SELECTING SPECIFIED CATEGORY      │ ～S11
   └─────────────────────┬───────────────┘
                         │
   ┌─────────────────────────────────────┐
   │      INPUTTING INPUT IMAGE          │ ～S12
   └─────────────────────┬───────────────┘
                         │
   ┌─────────────────────────────────────┐
   │        MATCHING IMAGES              │ ～S13
   └─────────────────────┬───────────────┘
                         │
   ┌─────────────────────────────────────┐
   │   SELECTING HIGHEST SCORE IMAGE     │ ～S14
   └─────────────────────┬───────────────┘
                         │
   ┌─────────────────────────────────────┐
   │        MERGING IMAGES AND           │ ～S15
   │     OUTPUTTING MERGED IMAGE         │
   └─────────────────────┬───────────────┘
                         │
                  ┌──────┴──────┐
                  │     END     │
                  └─────────────┘
```

# Fig. 3

EP 1 705 611 A1

FIRST FACE IMAGE          SECOND FACE IMAGE     MERGED FACE IMAGE

$$\alpha \left( \text{(first face image)} \right) + (1.0 - \alpha) \left( \text{(second face image)} \right) = \left( \text{(merged face image)} \right)$$

# Fig. 4

# F i g . 5

```
        ┌─────────────────┐
        │      START      │
        └─────────────────┘
                 │
   ┌──────────────────────────────┐
   │ SELECTING SPECIFIED CATEGORY │ ───S21
   └──────────────────────────────┘
                 │
   ┌──────────────────────────────┐
   │     INPUTTING  INPUT  IMAGE   │ ───S22
   └──────────────────────────────┘
                 │
   ┌──────────────────────────────┐
   │ RECONSTRUCTING  INPUT  IMAGE  AND │ ───S23
   │ GENERATING MINIMUM DEVIATION      │
   │    RECONSTRUCTED  IMAGE           │
   └──────────────────────────────┘
                 │
   ┌──────────────────────────────┐
   │      MERGING  IMAGE  AND      │ ───S24
   │   OUTPUTTING  MERGED  IMAGE   │
   └──────────────────────────────┘
                 │
        ┌─────────────────┐
        │       END       │
        └─────────────────┘
```

# Fig. 6

# Fig. 7

```
          ┌─────────────────┐
          │      START      │
          └─────────────────┘
                   │
   ┌───────────────────────────────────┐
   │   SELECTING SPECIFIED CATEGORY    │──S21
   └───────────────────────────────────┘
                   │
   ┌───────────────────────────────────┐
   │       INPUTTING INPUT IMAGE       │──S22
   └───────────────────────────────────┘
                   │
   ┌───────────────────────────────────┐
   │   RECONSTRUCTING INPUT IMAGE AND  │
   │   GENERATING MINIMUM DEVIATION    │──S23
   │        RECONSTRUCTED IMAGE        │
   └───────────────────────────────────┘
                   │
                                    S24a
                  ╱╲
                 ╱ IS ╲
          NO    ╱ DEGREE OF ╲
        ◄──────╱ SIMILARITY BELOW ╲
               ╲ PREDETERMINED ╱
                ╲   VALUE?   ╱
                  ╲╱
                   │ YES
   ┌───────────────────────────────────┐
   │    MERGING IMAGES AND OUTPUTTING   │
   │ MERGED IMAGE TO COMPONENT ANALYZING UNIT │──S24b
   └───────────────────────────────────┘
                   │
   ┌───────────────────────────────────┐
   │  RECONSTRUCTING MERGED IMAGE AND  │
   │   GENERATING MINIMUM DEVIATION    │──S25
   │        RECONSTRUCTED IMAGE        │
   └───────────────────────────────────┘
                   │
   ┌───────────────────────────────────┐
   │         MERGING IMAGE AND         │
   │      OUTPUTTING MERGED IMAGE      │──S26
   └───────────────────────────────────┘
                   │
          ┌─────────────────┐
          │       END       │
          └─────────────────┘
```

# Fig. 8

15

AGE OF PERSON

12 → INPUT IMAGE

INPUT CATEGORY

11b

MATCHING UNIT

102

103

MERGING UNIT

MERGED IMAGE

14

101c

CATEGORY1

CATEGORYi

CATEGORYn

1131

113i

113n

A

B

X

AGING IMAGE ACCUMULATING UNIT

# Fig. 9

```
┌─────────────────────┐
│       START         │
└─────────────────────┘
           │
┌─────────────────────────────────┐
│    INPUTTING AGE OF PERSON      │──── S31
└─────────────────────────────────┘
           │
┌─────────────────────────────────┐
│      INPUTTING INPUT IMAGE      │──── S32
└─────────────────────────────────┘
           │
┌─────────────────────────────────┐
│  DETERMINING IMAGE MOST SIMILAR TO  │
│   INPUT IMAGE FROM CATEGORY         │──── S33
│  CORRESPONDING TO INPUTTED AGE      │
└─────────────────────────────────┘
           │
┌─────────────────────────────────┐
│  SELECTING IMAGE CORRESPONDING TO   │
│   DETERMINED IMAGE FROM CATEGORY    │──── S34
│  CORRESPONDING TO SPECIFIED AGE     │
└─────────────────────────────────┘
           │
┌─────────────────────────────────┐
│       MERGING IMAGE AND          │──── S35
│    OUTPUTTING MERGED IMAGE       │
└─────────────────────────────────┘
           │
┌─────────────────────┐
│         END         │
└─────────────────────┘
```

# Fig. 10

15

12 — INPUT IMAGE

AGE OF PERSON

INPUT CATEGORY

11b

COMPONENT ANALYZING UNIT

102b

13b

MINIMUM DEVIATION RECONSTRUCTED IMAGE

101d

CATEGORY1          CATEGORYi          CATEGORYn

$114_1$          $114_i$          $114_n$

AGING IMAGE COMPONENT ACCUMULATING UNIT

COMPONENT COEFFICIENT CONVERTING UNIT    — 104

26

# Fig. 11

```
                    ┌─────────────┐
                    │    START    │
                    └─────────────┘
                           │
        ┌──────────────────────────────────────┐
        │         SELECTING CATEGORY           │    S41
        │   CORRESPONDING TO INPUTTED AGE      │
        └──────────────────────────────────────┘
                           │
        ┌──────────────────────────────────────┐
        │        INPUTTING INPUT IMAGE         │    S42
        └──────────────────────────────────────┘
                           │
        ┌──────────────────────────────────────┐
        │      RECONSTRUCTING INPUT IMAGE      │    S43
        └──────────────────────────────────────┘
                           │
        ┌──────────────────────────────────────┐
        │      SELECTING SPECIFIED CATEGORY    │    S44
        └──────────────────────────────────────┘
                           │
        ┌──────────────────────────────────────┐
        │        CONVERTING COEFFICIENTS       │    S45
        └──────────────────────────────────────┘
                           │
        ┌──────────────────────────────────────┐
        │ GENERATING AND OUTPUTTING MINIMUM    │    S46
        │  DEVIATION RECONSTRUCTED IMAGE       │
        └──────────────────────────────────────┘
                           │
                    ┌─────────────┐
                    │     END     │
                    └─────────────┘
```

# Fig. 12

# Fig. 13

```
          ┌──────────────┐
          │    START     │
          └──────────────┘
                 │
    ┌────────────────────────────────┐
    │      SELECTING CATEGORY        │ ～S41
    │  CORRESPONDING TO INPUTTED AGE │
    └────────────────────────────────┘
                 │
    ┌────────────────────────────────┐
    │     INPUTTING INPUT IMAGE      │ ～S42
    └────────────────────────────────┘
                 │
    ┌────────────────────────────────┐
    │    RECONSTRUCTING INPUT IMAGE  │ ～S43
    └────────────────────────────────┘
                 │
    ┌────────────────────────────────┐
    │    SELECTING SPECIFIED CATEGORY│ ～S44
    └────────────────────────────────┘
                 │
    ┌────────────────────────────────┐
    │     CONVERTING COEFFICIENTS    │ ～S45
    └────────────────────────────────┘
                 │
    ┌────────────────────────────────┐
    │ GENERATING AND OUTPUTTING MINIMUM│ ～S46
    │  DEVIATION RECONSTRUCTED IMAGE │
    └────────────────────────────────┘
                 │
    ┌────────────────────────────────────┐
    │MERGING IMAGES AND OUTPUTTING MERGED IMAGE│ ～S57
    └────────────────────────────────────┘
                 │
          ┌──────────────┐
          │     END      │
          └──────────────┘
```

# Fig.14

15

12 —— INPUT IMAGE

AGE OF PERSON

INPUT CATEGORY

11b

102b

COMPONENT
ANALYZING UNIT

103

MERGING UNIT

MERGED IMAGE

14

101d

CATEGORY1

CATEGORYi

CATEGORYn

1141

114i

114n
AGING
IMAGE COMPONENT
ACCUMULATING UNIT

COMPONENT COEFFICIENT
CONVERTING UNIT

104

30

# Fig. 15

START

SELECTING CATEGORY CORRESPONDING TO INPUTTED AGE ~S41

INPUTTING INPUT IMAGE ~S42

RECONSTRUCTING INPUT IMAGE ~S43

SELECTING SPECIFIED CATEGORY ~S44

CONVERTING COEFFICIENTS ~S45

GENERATING AND OUTPUTTING MINIMUM DEVIATION RECONSTRUCTED IMAGE ~S46

IS DEGREE OF SIMILARITY BELOW PREDETERMINED VALUE? S57a

NO

YES

MERGING IMAGES AND OUTPUTTING MERGED IMAGE TO COMPONENT ANALYZING UNIT ~S57b

RECONSTRUCTING MERGED IMAGE ~S58

CONVERTING COEFFICIENTS ~S59

GENERATING AGAIN AND OUTPUTTING MINIMUM DEVIATION RECONSTRUCTED IMAGE ~S60

MERGING IMAGE AND OUTPUTTING MERGED IMAGE ~S61

END

31

# INTERNATIONAL SEARCH REPORT

International application No.

PCT/JP2005/000054

A.  CLASSIFICATION OF SUBJECT MATTER
Int.Cl$^7$  G06T1/00

According to International Patent Classification (IPC) or to both national classification and IPC

B.  FIELDS SEARCHED

Minimum documentation searched (classification system followed by classification symbols)
Int.Cl$^7$  G06T1/00, G06T11/00, A61B5/00

Documentation searched other than minimum documentation to the extent that such documents are included in the fields searched

Electronic data base consulted during the international search (name of data base and, where practicable, search terms used)
JSTPLUS(JOIS)

C.  DOCUMENTS CONSIDERED TO BE RELEVANT

| Category* | Citation of document, with indication, where appropriate, of the relevant passages | Relevant to claim No. |
|---|---|---|
| X | Shigeru MUKODA et al., "PCA o Mochiita Nenrei Chikaku ni Kansuru Kao Keijo Tokucho no | 9,10,19,20, 26 |
| A | Chushutsu - Mikake no Nenrei Joho no Riyo -", The Institute of Electronics, Information and Communication Engineers Gijutsu Kenkyu Hokoku (HIP 2001-99), The Institute of Electronics, Information and Communication Engineers, 01 March, 2002 (01.03.02), Vol.101, No.699, pages 17 to 24 | 1-8,11-18, 21-25 |
| A | LANITIS, A. et al., 'Modeling the process of Ageing in Face Images' In: IEEE Computer Vision, 7th International Conference, Sept. 1999, Vol.1, pages 131 to 136 | 1-26 |

☒  Further documents are listed in the continuation of Box C.          ☐  See patent family annex.

| | |
|---|---|
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>26 January, 2005 (26.01.05) | Date of mailing of the international search report<br>15 February, 2005 (15.02.05) |
|---|---|
| Name and mailing address of the ISA/<br>Japanese Patent Office | Authorized officer |
| Facsimile No. | Telephone No. |

Form PCT/ISA/210 (second sheet) (January 2004)

**EP 1 705 611 A1**

**INTERNATIONAL SEARCH REPORT**

| International application No. |
|---|
| PCT/JP2005/000054 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2003-044873 A  (Waseda University), 14 February, 2003 (14.02.03), Full text; all drawings (Family: none) | 1-26 |

Form PCT/ISA/210 (continuation of second sheet) (January 2004)

33

## INTERNATIONAL SEARCH REPORT

| International application No. |
|---|
| PCT/JP2005/000054 |

**Box No. II**     **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III**     **Observations where unity of invention is lacking (Continuation of item 3 of first sheet)**

This International Searching Authority found multiple inventions in this international application, as follows:
    The inventions of claims 1-8, 11-18, 21-25 relate to the technique for deciding an image having the highest similarity with the input image and combining it with the input image.
    The inventions of claims 9, 10, 19, 20, 26 relate to the technique for using a predetermined constituent component to give a feature change to the input image.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**       ☐ The additional search fees were accompanied by the applicant's protest.

☐ No protest accompanied the payment of additional search fees.

Form PCT/ISA/210 (continuation of first sheet (2)) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6556196 B1
- JP P200344866 A
- JP 6333005 A
- JP 10289320 A
- JP P2002123837 A
- JP P200369846 A